# EUROPEAN PATENT APPLICATION

(11) **EP 4 844 847 A1**
(43) Date of publication of application: **25.11.2026**
(21) Application number: 26179494.5
(22) Date of filing: 19.05.2026
(51) Int. Cl.: H01M 8/1004, H01M 8/0286, H01M 8/1053, H01M 8/1065, H01M 8/1067, H01M 8/1069, H01M 8/1086, H01M 8/10

(54) **PROCESS FOR THE CONTINUOUS MANUFACTURE OF COMBINED SUBGASKET AND MEMBRANE SUPPORT COMPONENTS**

(30) Priority: 21.05.2025 EP 25177916
(71) Applicant: Carl Freudenberg KG, 69469 Weinheim (DE)
(72) Inventor: MERKEL, Simon, 80803 München (DE); FICHTNER-SEPT, Johannes, 91522 Ansbach (DE); BERNT, Maximilian, 80807 München (DE); JURZINSKY, Tilman, 81735 München (DE)

(57) **Abstract**

The present invention is directed to a combined subgasket and membrane support component for electrochemical applications having a substantially fluid impermeable subgasket region encompassing a structured membrane support region as well as a process for its manufacture. Also provided are a process for manufacture of a reinforced membrane component and a process for the manufacture of a membrane electrode assembly (MEA).

## Description

The present invention is directed to a combined subgasket and membrane support component for electrochemical applications having a substantially fluid impermeable subgasket region encompassing a structured membrane support region as well as a process for its manufacture. Also provided are a process for manufacture of a reinforced membrane component and a process for the manufacture of a membrane electrode assembly (MEA).

Ion exchange membranes are used in many applications like electrolysis, electrodialysis and proton exchange membrane (PEM) fuel cells. The PEM fuel cell includes typically three basic components: an electrolyte membrane and a pair of electrodes, including a cathode and an anode. The electrolyte membrane is sandwiched between the electrodes to form a membrane-electrode-assembly (MEA). The MEA is typically disposed between porous diffusion media (DM), such as carbon fiber paper, which facilitates a delivery of reactants such as hydrogen to the anode and oxygen, typically from air, to the cathode. In the electrochemical fuel cell reaction, the hydrogen is catalytically oxidized in the anode to generate free protons and electrons. The protons pass through the electrolyte to the cathode. The electrons from the anode cannot pass through the electrolyte membrane, and are instead directed as an electric current to the cathode through an electrical load, such as an electric motor. The protons react with the oxygen and the electrons in the cathode to generate water.

Hence, the main functions of the membrane are proton conduction and gas separation between anode and cathode and, therefore, conductance (transport of protons) and permeance (transport of hydrogen from the anode side of the MEA to the cathode side) are key properties of a PEM. The ratio of these two properties (i.e., proton conductance divided by hydrogen permeance) is often referred to as selectivity. Other critical properties of PEMs are the inherent mechanical properties, such as the yield strength, which affect the useful lifetime of the PEM in the application. Furthermore, the cost of the PEM is also an important consideration. Thus, high selectivity (via high conductance and/or low permeance), high durability, and low cost, are all desirable qualities in a PEM.

For example, WO 01/61774 A1 describes a reinforced ion exchange membrane for application in electrochemical cells made from a porous film of non proton-conducting polymer, such as polyethylene, impregnated with a proton conducting polymer. Thus, compared to non-reinforced membranes only a small amount of the expensive proton conductor has to be used. In addition, this document teaches that - prior to the impregnation of the porous film - areas of the membrane that are outside the active areas of the electrochemical cell are made non porous or almost non porous in a separate step, e.g. by application of sufficient time and temperature, by impregnation with a non proton conducting polymer or by laminating and pressing a non porous thermoplastic foil on the porous reinforcement.

Furthermore, WO 2018/231232 A1 discloses highly reinforced ionomer membranes for high selectivity and high strength. The composite membranes are characterized by an increased volume of the microporous polymer structure and a lower ionomer content.

The most common approach in the manufacture of fuel cells or electrolyzers is the use of a commercially available membrane reinforcement, e.g. on basis of PTFE material, which is manufactured in a separate step and subsequently combined with other materials, such as the ion-conducting material. Moreover, an additional gasket component has to be provided which serves in handling and separation of compartments of the fuel cell or electrolyzers, especially to separate the electrodes from the periphery in a gas-tight manner.

The electrolyte membrane, electrodes, and DM are disposed between a pair of fuel cell plates and sealed, for example, with a gasket providing a substantially fluid-tight seal. The electrolyte membrane also typically has a barrier film or subgasket coupled thereto to provide internal reinforcement and to separate the hydrogen gas and the air supplied to the fuel cell stack. The subgasket generally overlays an edge of the electrolyte membrane and is formed in a secondary operation by cutting a piece of polymeric sheet material and bonding the sheet material to the electrolyte membrane with at least one of compression and an adhesive. However, ensuring proper alignment of the polymeric sheet material forming the subgasket with the electrolyte membrane is known to be difficult. Excess polymeric sheet material formed during formation of the subgasket also cannot be reused, resulting in an undesirable waste of material. The overlaying of the subgasket at the edge of the electrolyte membrane can further create an undesirable stress riser within the fuel cell stack.

In order to solve these issues US 2010/0159294 A1 describes a method for fabricating a membrane electrode assembly that includes a substantially fluid impermeable feed region circumscribing a porous membrane support region, wherein at least one of the feed region and the membrane support region is formed by a radiation-cured structure. In particular, it is described to provide a combined subgasket and membrane support component by forming a porous membrane support region integrally with the feed region of the subgasket. The porous membrane support region is formed as a radiation-cured structure including a microtruss structure. In a subsequent step the radiation-cured microtruss structure is then imbibed with an ionomer to form the electrolyte membrane.

While the method described in US 2010/0159294 may facilitate an alignment of the electrolyte membrane and subgasket within the fuel cell, there is still a need for an improved method for fabricating combined subgasket and membrane support components - in particular a need for cost-efficient methods that allow a simple and high-volume production of such components.

These problems are solved by the process for the manufacture of a combined subgasket and membrane support component according to claims 1 to 8. The invention also relates to a combined subgasket and membrane support component according to claim 9 as well as a process for manufacture of a reinforced membrane component according to claims 10 to 12 and a process for the manufacture of a membrane electrode assembly (MEA) according to claims 13 to 15.

In a first aspect, the present invention relates to a process for the manufacture of a combined subgasket and membrane support component for electrochemical applications, comprising:
(a) providing a polymer film; and
(b) contacting the polymer film with a template exhibiting a negative structure to form a structure in the polymer film in a continuous manner to obtain a combined subgasket and membrane support component comprising a substantially fluid impermeable subgasket region encompassing a structured membrane support region.

Accordingly, the combined subgasket and membrane support component comprises a first region, the membrane support region, and a second region, the subgasket region. The subgasket region encompasses - in a two-dimensional plane - the membrane support region. The subgasket region is characterized in that it is substantially fluid impermeable, i.e. substantially impermeable to liquids and gases, to achieve the desired fluid-tight seal for the MEA. The membrane support region comprises a structure so that this region is suitable to serve as a reinforcement for a polymer electrolyte membrane.

The process according to the invention allows the production of a combined subgasket and membrane support component in a very simple and cost-effective manner. It is particularly advantageous that both the structure of membrane support region and the structure of subgasket region are formed in a continuous manner in a single step. Thus, the desired structure of the membrane support region - which is typically characterized by the presence of pores (see, e.g., WO 01/61774 A1 or WO 2018/231232 A1) or another microstructure (see, e.g., US 2010/0159294 A1) - and the structure of the subgasket region - which is typically characterized by supply manifolds and exhaust manifolds of the fuel cell stack (see, e.g. US 2010/0159294 A1) - can be formed as an integral component in a single step in a continuous manner facilitating the simple high-volume production of electrochemical devices.

Furthermore, the process according to the invention is advantageous as it facilitates an alignment of the electrolyte membrane and subgasket within the fuel cell - taking into account the use of an unchanging template in a continuous manner leading to a plurality of components having uniform geometry. This use of an unchanging template also results in a low scrap rate.

Moreover, the process according to the invention reduces the risk of formation of stress risers within the fuel cell at the junction between the subgasket and the electrolyte membrane because both the membrane support region and the subgasket region are formed from the same piece of material resulting in a monolithic design.

It is a further advantage of the process according to the invention that the combined subgasket and membrane support component can be manufactured at a relatively low process temperature which in turns results in low energy consumption and low stress on materials.

In addition, the obtained combined subgasket and membrane support component can be easily converted into a reinforced membrane component showing a high selectivity and high durability.

According to a particularly preferred embodiment, the polymer film provided in step (a) is a rolled-up polymer film, i.e. a polymer film wound onto a roll. The polymer film is unwound to contact the template in step (b) and subsequently re-wound onto another roll after the contacting step. Hence, it is particularly preferred that the process of the first aspect of the invention is a roll-to-roll process.

Moreover, while the template used in step (b) can be any template having a negative structure which is suitable to give the polymer film the desired structure of the membrane support region and the subgasket region, such as a flat stamp, it is particularly preferred that the template is a template roller. In particular, in step (b) the polymer film is fed between a template roller and a counter roller. In this way, particularly high throughputs can be achieved so that the process according to the invention is particularly efficient in high volume production.

In general, the structure of the template roller determines the structure of the polymer film after the contacting step, and the template roller has a structure that is negative to the structure of the polymer film after the contacting step. Hence, a height or embossment in the surface of the template roller results in a recess in the surface of the structured polymer film.

In particular, the surface of the template roller includes (i) at least one region having a negative structure to impart the desired structure of the membrane support region and (ii) at least one region having means to impart the desired structure of the subgasket region.

Besides the geometry of the surface of the template roller, the structures imparted by the template roller to the polymer film can generally be controlled by various factors known to the skilled person, such as the temperature and the pressure applied between the template roller, or upper roller, and counter roller, or substrate roller or mating roller. For instance, if the polymer film comprises polyamide the formation of a structure in step (b) may comprise application of an effective nip pressure between the template roller and the counter roller of, e.g., 2 to 6 MPa like 2 to 4 MPa at temperatures of, e.g. 150 to 160°C. Moreover, such formation of a structure may include roll speeds of, e.g., 0.1 to 0.3 m/min. Further details of suitable conditions to generate microstructures by roll-to-roll embossing can be found in, e.g., N. Kodihall Shivaprakash et al., International Polymer Processing, 34(5), 502 - 512 (2019), and T. Velten et al., Micrsyst. Techn., 17(4), 619 - 627 (2011), the teaching of which is incorporated herein by reference. In general, suitable parameters for forming the desired structure in step (b) can be arrived at by a skilled person because it is generally known that a plastic deformation of polymer particularly depends on the temperature and the mechanical stress, in particular the softening point of the polymer film used and its yield strength. For instance, if the polymer film comprises PET, the formation of the structure in step (b) may comprise a temperature equal to or preferably lower than the softening point (about 255°C) and/or equal to or preferably lower than the yield strength (about 50 MPa).

According to a preferred embodiment, the formation of a structure in step (b) comprises the formation of at least one supply aperture and at least one exhaust aperture in the subgasket region. Such supply aperture(s) and exhaust aperture(s) are provided to form supply manifolds and exhaust manifolds in the later fuel cell stack by an alignment of the respective apertures when stacking a plurality of components and electrodes/plates having respective gas channels. In particular, hydrogen gas is supplied to an anode supply manifold and oxygen/air is supplied to a cathode supply manifold of a fuel cell stack. The subgasket region may contain further apertures and/or channels, for example a coolant supply aperture and/or a coolant exhaust aperture to supply and remove a liquid coolant.

According to a preferred embodiment, the subgasket region comprises a total of four or six apertures or more, and all these apertures are formed in step (b) simultaneously with the structuring of the membrane support region.

Furthermore, it is preferred that the formation of apertures in the subgasket region is achieved by cutting dies on the surface of the template roller. In other words, the formation of the at least one supply aperture and the at least one exhaust aperture is achieved by die cutting by means of dies on the surface of the template roller.

In general, it is preferred that the thickness of the subgasket region is in the range of the target thickness of the membrane region or less. Thus, the thickness of the subgasket region is preferably equal to or less the thickness of the membrane region. In particular, the thickness of the subgasket region is from 1 µm to 1,000 µm, preferably 1 µm to 500 µm or 1 µm to 100 µm. Likewise, the thickness of the membrane region is preferably from 1 µm to 1,000 µm, preferably 1 µm to 500 µm or 1 µm to 100 µm.

In particular, the subgasket region is substantially planar. This facilitates the assembly of the combined subgasket and membrane support component in a MEA or another electrochemical device that requires a separation of the compartments in a liquid and gas-tight manner.

According to the present invention, the formation of a structure in step (b) comprises the formation of a structured membrane support region. In accordance with a preferred embodiment, the formation of a structure in step (b) comprises the formation of perforations in the structured membrane support region.

It is preferred that the formation of perforations in the structured membrane support region is achieved by embossments on the surface of the template roller.

In particular, a plurality of perforations, i.e. holes or openings extending from one side of the membrane support region to the opposite side, is formed in the membrane support region. The perforations can have the form of cylindrical holes, i.e. in top view onto the membrane support region the perforations have a circular or a substantially circular shape/perimeter and in cross-sectional view the diameter of the perforations is substantially constant over the thickness of the membrane support region. However, other geometries of the perforations are also possible. For example, in top view onto the membrane support region the perimeter of the perforations can be not only circular, but also triangular, rectangular, or hexagonal, or may have any other regular or irregular shape. Moreover, in a cross-sectional view, a conical shape is possible too.

The perforations can have an average radius - as determined by using a microscopic method, such as an optical microscope or preferably SEM - of 1 to 500 µm, preferably 1 to 300 µm, more preferably 1 to 150 µm, such as 1 to 100 µm or 2 to 50 µm. As used herein, the radius of a perforation is determined using a microscopic top view onto the surface of the membrane support region by measuring the distance between the center of area of a perforation and the most distant point on the perimeter of the perforation. If a perforation has a circular shape the radius of the perforation is the radius of the circle. In particular, the average radius of the perforations are determined by measuring the radius of at least 20, preferably at least 100, perforations and then calculating the average value.

Alternatively or in addition, the average distance between adjacent perforations - as measured by an optical microscope or preferably by SEM from the center of area of one perforation to the center of area of an adjacent perforation - can be 1 to 500 µm, preferably 1 to 300 µm, in one or both dimensions of the plane of the component's extension. A membrane support region having such perforations is on the one hand particularly well suited for subsequent application of ionomer in a simple and less time-consuming manner and on the other hand particularly well suited for adequate mechanical stability of the membrane region. Due to a possible "anchoring" of the ion-conducting polymer in the cavities of the perforations in a subsequent step of producing a MEA, a very high durability of the final product (MEA with PEM in membrane support region) can be achieved. Furthermore, due to the perforations according to the invention a high proton conductivity can be achieved.

The polymer film provided in step (a) of the process of the first aspect can comprise any polymer suitable as reinforcing material and subgasket material in electrochemical applications, such as any polymer showing a high temperature stability - such as 180 °C for 30 minutes - a high hydrolysis stability, a high acid stability, a sufficient mechanical strength, such as at least 200 MPa, a low water absorption, a low swelling when absorbing water and/or a low permeability to oxygen and/or hydrogen.

In a preferred embodiment, the polymer film comprises thermoplastic polymers, preferably selected from the group consisting of PET, PEN, PES (polyethersulfone), LDPE, MDPE, HDPE, LLDPE, UHMWPE, PP, polyesters, polyamides, polysulfones, PTFE, ECTFE (ethylene-chlorotrifluoroethylene), PEK, PEEK, PEEKK, PBI (polybenzimidazoles), PI (polyimides) and combinations thereof, fiber-reinforced thermoplastics, polymers from renewable biomass sources, such as cellulose hydrate and/or other cellulose-based polymers, thermoplastic elastomers, and combinations and/or blends and/or sulfonated derivatives of the above-mentioned polymers.

In a second aspect, the present invention provides a combined subgasket and membrane support component obtainable by the process of the first aspect. Thus, the present invention particularly also relates to a combined subgasket and membrane support component for electrochemical applications comprising a substantially fluid impermeable subgasket region encompassing a structured membrane support region, with the membrane support region being integrally formed with the subgasket region, wherein the subgasket region comprises at least one supply aperture and at least one exhaust aperture and wherein the membrane support region comprises a plurality of perforations having an average radius of 1 to 500 µm.

It is preferred that the combined subgasket and membrane support component of the second aspect is characterized by the features described above in connection with the first aspect. Hence, it is particularly preferred that the perforations have an average radius of 1 to 300 µm and/or an average distance between adjacent perforations of 1 to 500 µm.

In a third aspect, the present invention relates to a process for the manufacture of a reinforced membrane component for electrochemical applications comprising
(c) producing a combined subgasket and membrane support component in accordance with the first aspect or providing a combined subgasket and membrane support component in accordance with the second aspect; and
(d) applying ion-conducting polymer to the structured membrane support region.

The application of ion-conducting polymer in step (d) is preferably carried out by applying a solution or a paste of the ion-conducting polymer. Suitable processes can comprise spray coating, blade coating, flatbed coating, curtain coating, slide coating, gravure coating, slot die processing and subtypes of the above such as kiss coating etc. The solution and/or paste of the ion-conducting polymer can comprise a solvent, such as methanol, ethanol, propanol, acetone, DMAc, DMF, butanol and/or water.

It is also preferred to apply the ion-conducting polymer in a solid form, e.g. by positioning a layer of the ion-conducting polymer and the combined subgasket and membrane support component in such a way that the ion-conducting polymer layer and the combined subgasket and membrane support component come into contact with each other and are joined together by hot pressing or hot lamination. The ion-conducting polymer layer can be a layer of the ion-conducting polymer as such - if mechanically stable enough - or a layer of ion-conducting polymer supported on a support film, such as a PET film, or supported on a further component of a MEA, such as an electrode like a gas diffusion electrode. Hence, it is also possible to join together the combined subgasket and membrane support component and an ion-conducting polymer layer supported on an electrode, e.g. by hot lamination.

The ion-conducting polymer can be selected from the group consisting of perfluorosulfonic acid polymers (such as Nafion^{™}), non-fluor-containing organic ion conducting materials (such as Pemion^{™}) and combinations thereof.

The obtained reinforced membrane component shows a high long-term durability - in particular in terms of mechanical properties - when being operated in a membrane electrode assembly, as described below.

If a non-transparent ion-conduction polymer is used, the average radius of the perforations of the combined subgasket and membrane component of the resulting reinforced membrane component can be determined based on a microscopic side view obtained after cryo-polishing at about -70°C.

It has been found that the reinforced membrane component obtained according to the third aspect of the present invention is characterized by a beneficial swelling behavior, i.e. a favorably low swelling rate. The swelling behavior of the membrane can be determined via the following swelling test. A dry membrane specimen having a dimension of 5 x 5 cm² is separated from any substrate or backing layer and is allowed to reach its equilibrium state in the atmosphere (room temperature and about 50%RH) for 24 h. The specimen is then placed on a substrate which allows for detailed measurement of the geometric dimension in x-y dimension, e.g. by using an optical setup with a scale of an accuracy of 1 mm or smaller. The measurement of the dimensions is taken and the area is determined. In addition, the specimen is weighed on a scale with an accuracy of ±0.001 g or smaller. Subsequently, the specimen is put into ultra-pure water (e.g. 18 MOhm) and soaked for 48 h at 60°C in a closed container with a ratio of at least 1000:1 w/w water-to-membrane ratio to allow for full water-uptake. After that, the membrane is taken out, dried superficially with a microfiber cloth and immediately weighed and measured for x- and y- dimensions. Change of weight and change of area is then calculated by dividing the obtained values by the corresponding initial values. It has been found that, according to the swelling test described herein, the reinforced membrane component of the present invention preferably has a change in weight of less than 40% and a change in area of 1.0 % or less.

In a fourth aspect, the present invention is directed to a process for the manufacture of a membrane electrode assembly (MEA) for electrochemical applications, comprising
(e) producing a reinforced membrane component in accordance with the third aspect; and
(f) providing at least one electrode on at least one side of the reinforced membrane;
   or
(e') producing a combined subgasket and membrane support component in accordance with the first aspect or providing a combined subgasket and membrane support component in accordance with the second aspect; and
(f') providing at least one electrode on at least one side of the combined subgasket and membrane support component, wherein the at least one electrode comprises ion-conducting polymer on its side facing the combined subgasket and membrane support component.

In particular, one electrode is provided on a first side of the reinforced membrane or combined subgasket and membrane support component and a second electrode is provided on a second side of the reinforced membrane or combined subgasket and membrane support component, wherein the second site is opposite to the first side.

The MEAs assembled on the basis of reinforced membrane components utilizing a combined subgasket and membrane support component of the invention have an optimized design form handling and manageability in, e.g., low temperature PEM fuel cell stacks or different types of electrocatalytic devices, such as electrolyzers.

In general, the MEA can comprise a composite of two electrodes (anode and cathode) and a reinforced membrane component according to the invention arranged between the electrodes. The electrodes can each comprise one or more layers selected from a catalyst layer (CL), a gas diffusion layer (GDL), a microporous layer (MPL) and combinations thereof. For example, one or both electrodes can comprise a catalyst layer without GDL and/or MPL. Alternatively, one or both electrodes each comprise a porous, air-permeable layer (GDL) coated with a catalyst on the membrane side.

The GDLs coated with the catalyst layer are also known as gas diffusion electrodes (GDEs). The GDL is usually also coated with a microporous layer (MPL) on the catalyst side.

The electrodes usually comprise (supported) catalysts that are combined with so-called ionomer. The anodic hydrogen oxidation reaction and the cathodic oxygen reduction reaction take place on the catalyst surface. These reactions generate the electricity that can later be used from the chemical energy of the fuels. The ionomer performs the electrolytic conduction function, while the catalyst carrier or the catalyst itself performs the electrical conduction.

The membrane separates the electrodes from each other. It not only prevents the flow of electrons, but also the exchange of gases between the two electrodes. In addition to its separating function, the membrane also allows protons (the product of the anodic hydrogen oxidation reaction) to diffuse from the anode to the cathode. These protons react at the cathode to form water. The GDL and the MPL applied to it have the function of removing the reactants of the electrochemical partial reactions (hydrogen and atmospheric oxygen) and the water produced during the reactions from the electrodes and also supplying them to the electrodes.

In order to operate the MEA, the two electrodes must also be separated from the periphery at the interface in a gas-tight manner; this is ensured by the so-called gasket (sometimes also referred to as the inner seal). The gasket separates the media of the anode and cathode at the interface of the active materials (electrodes, membrane, GDL/MPL).

GDLs are well known. They usually consist of a planar, porous, gas-permeable material, e.g., carbon fibers with a PTFE hydrophobic coating.

MPLs are also known per se. According to the invention, MPLs are preferably made of carbon (graphite, carbon black) and a binder (e.g., PTFE).

According to the invention, an electrode can be obtained as follows: A GDL layer or a GDL layer having an MPL coating is provided with a catalyst layer by a coating process, such as direct coating, decal transfer, or a comparable process. Optionally, the catalyst layer comprises a first catalyst layer of standard industrial practice and an optional second catalyst/ionomer layer, which prevents an ion-conducting polymer solution or paste from penetrating into the catalyst, in case the ion-conducting polymer is applied on the catalyst layer in a first step and the so-obtained ion-conducting polymer layer supported on the catalyst layer of the electrode is applied to the combined subgasket and membrane support component at a later stage.

Hence, according to a preferred embodiment of the invention, a membrane electrode assembly (MEA) for electrochemical applications can be obtained by (i) providing a combined subgasket and membrane support component in accordance with the invention, (ii) applying ion-conducting polymer to the membrane region of the combined subgasket and membrane support component, preferably by applying a solution or paste of the ion-conducting polymer or by applying the ion-conducting polymer via hot lamination or hot pressing, to obtain a reinforced membrane component; and (iii) applying at least one electrode on at least one side of the reinforced membrane, wherein the at least one electrode can comprise a catalyst layer (CL), a microporous layer (MPL) and a gas diffusion layer (GDL). Optionally, the at least one electrode can already comprise ion-conducting polymer on its surface facing the reinforced membrane, i.e. the electrode can already comprise a part of the membrane polymer. According to one option, one or all layers of the electrode are applied to the reinforced membrane by direct coating, decal transfer, or a comparable process.

According to another preferred embodiment, a membrane electrode assembly (MEA) for electrochemical applications can be obtained by (i) providing a combined subgasket and membrane support component in accordance with the invention, and (ii) applying at least one electrode on at least one side of the combined subgasket and membrane support component, wherein the at least one electrode comprises ion-conducting polymer on its surface facing the combined subgasket and membrane support component, i.e. the electrode already comprise the membrane polymer. Such application of the electrode comprising membrane polymer can preferably be achieved by hot lamination or hot pressing techniques, as described above. Again the electrode can comprise a catalyst layer (CL), a amicroporous layer (MPL) and a gas diffusion layer (GDL).

The present invention is described in further detail by means of the following figures.
Fig. 1 illustrates a schematic plan view of a combined subgasket and membrane support component according to the invention.
Fig. 2 illustrates a schematic perspective view of the basic principle of manufacturing a combined subgasket and membrane support component according to the invention.
Fig. 3 illustrates a schematic cross-sectional view of a reinforced membrane component in accordance with the invention.
Fig. 4 illustrates a schematic cross-sectional view of a MEA produced in accordance with the invention.

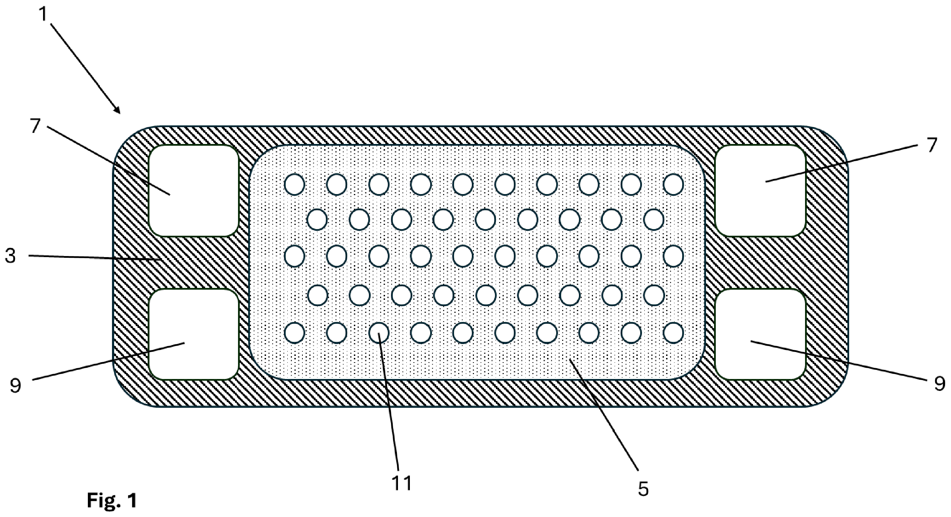

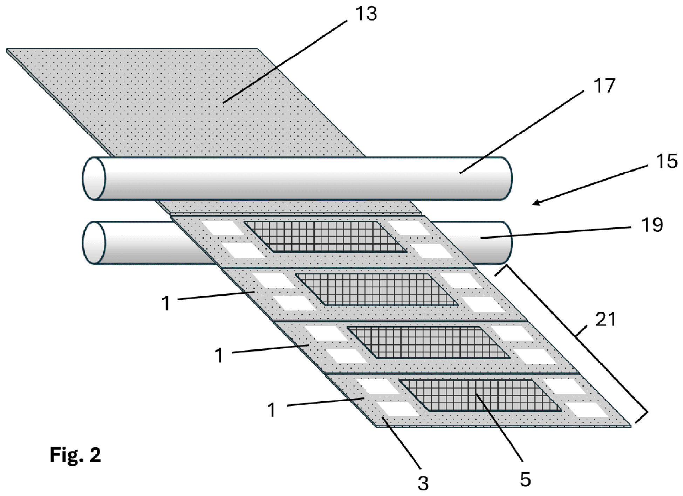

Figure 1 depicts a schematic plan view of a combined subgasket and membrane support component 1 according to the invention. The combined component 1 includes a subgasket region 3 circumscribing a structured membrane support region 5. The subgasket region 3 and the structured membrane support region 5 are integrally formed with each other, i.e. the subgasket region 3 and the structured membrane support region 5 are monolithic. This is achieved by forming the combined subgasket and membrane support component 1 from one piece of material, *viz.* polymer film, as further illustrated below in connection with Figure 2.

The subgasket region 3 is substantially impermeable to gases and liquids. It comprises two supply apertures 7 and two exhaust apertures 9. When utilizing the combined subgasket and membrane support component 1 in a MEA, hydrogen gas can be supplied to an anode and oxygen/air can be supplied to a cathode via supply apertures 7. In particular, when operating a plurality of MEAs in the form of a so-called fuel cell stack, supply manifolds and exhaust manifolds are formed by alignment of respective apertures 7 and 9.

The membrane support region 5 comprises a plurality of perforations 11. The perforations 11 are formed as vertical cylindrical holes in the polymer of the membrane support region 5. According to a preferred embodiment, the perforations 11 are characterized by an average diameter of 2 to 1,000 µm and/or a distance between adjacent perforations of 1 to 500 µm. It has been found that a membrane support region 5 having such perforations11 is particularly well suited for subsequent application of proton conducting polymer in a simple and less time-consuming manner and for providing a good mechanical stability of the membrane region.

Figure 2 illustrates a preferred way of manufacturing the combined subgasket and membrane support component 1. An unstructured polymer film 13 is fed to a template unit 15 comprising a template roller 17 and counter roller 19. After contacting the template roller 17, the polymer film is structured. The structured polymer film 21 comprises a plurality of combined subgasket and membrane support components 1 each comprising a subgasket region 3 and a structured membrane support region 5, as described above in connection with Figure 1. The simple roll-to-roll process enables a high-volume production of combined subgasket and membrane support components that can be utilized effectively in membrane electrode assemblies.

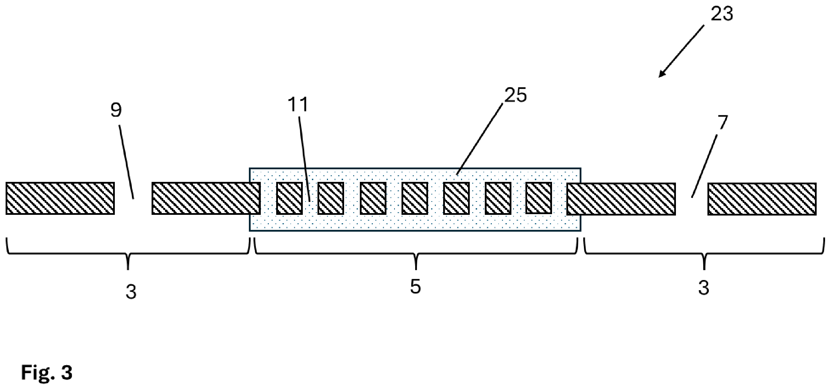

Figure 3 shows a schematic cross-sectional view of a reinforced membrane component 23 according to the invention. The reinforced membrane component 23 comprises a subgasket region 3 which is an electrochemically inactive area that is substantially planar. The subgasket region 3 comprises apertures 7 and 9 for the distribution of gases and/or liquids. Moreover, the reinforced membrane component 23 comprises a membrane support region 5 made from the same polymer as the subgasket region 3. The membrane support region 5 comprises a plurality of perforations 11. Ion-conducting polymer 25 is present in the area of the membrane support region 5, wherein the ion-conducting polymer 25 is located both within the perforations 11 and above and below the membrane support region 5.The membrane support region 5 comprising the ion-conducting polymer 25 forms a microstructured electrochemically active area that functions as a membrane when being operated in a MEA.

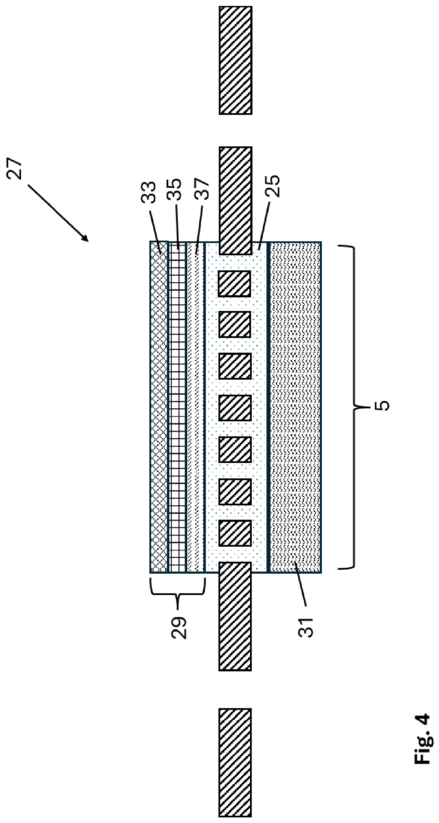

Figure 4 shows a schematic cross-sectional view of a membrane electrode assembly (MEA) 27 produced from the reinforced membrane component 23 in accordance with the invention. The MEA 27 comprises an electrode 29 above the area of the membrane support region 5 comprising the ion-conducting polymer 25 and an electrode 31 below the area of the membrane support region 5 comprising the ion-conducting polymer 25. The electrode 29 is a gas diffusion electrode comprising a gas diffusion layer (GDL) 33, a microporous layer (MPL) 35 and a catalyst layer (CL) 37. The catalyst layer 37 is located on the side facing the ion conducting polymer 25, while the gas diffusion layer 33 is located on the opposite side and the microporous layer 35 is sandwiched between the catalyst layer 37 and the gas diffusion layer 33. In an alternative embodiment (not shown), the electrode 29 has an alternative structure as described above in the general description, i.e. electrode 29 comprises one or more layers selected from a catalyst layer (CL), a gas diffusion layer (GDL), a microporous layer (MPL). The electrode 31 is a gas diffusion electrode that can have the same structure as electrode 29 or a different structure.

## Claims

1. Process for the manufacture of a combined subgasket and membrane support component for electrochemical applications, comprising:
(a) providing a polymer film; and
(b) contacting the polymer film with a template exhibiting a negative structure to form a structure in the polymer film in a continuous manner to obtain a combined subgasket and membrane support component comprising a substantially fluid impermeable subgasket region encompassing a structured membrane support region.

2. Process according to claim 1, wherein in step (b) the polymer film is fed between a template roller and a counter roller.

3. Process according to claim 1 or 2, wherein the formation of a structure in step (b) comprises the formation of at least one supply aperture and at least one exhaust aperture in the subgasket region.

4. Process according to claim 3, wherein the formation of the at least one supply aperture and at least one exhaust aperture is achieved by die cutting by means of dies on the surface of the template roller.

5. Process according to anyone of claims 1 to 4, wherein the formation of a structure in step (b) comprises the formation of perforations and/or microstructures in the structured membrane support region.

6. Process according to claim 5, wherein the formation of perforations comprises formation of a plurality of perforations having an average radius of 1 to 500 µm and/or an average distance between adjacent perforations of 1 to 500 µm.

7. Process according to any one of claims 1 to 6, wherein the thickness of the subgasket region is from 1 µm to 1,000 µm, preferably 1 µm to 500 µm or 1 µm to 100 µm.

8. Process according to any one of claims 1 to 7, wherein the polymer film comprises thermoplastic polymers, preferably selected from the group consisting of PET, PEN, PES, LDPE, MDPE, HDPE, LLDPE, UHMWPE, PP, polyesters, polyamides, polysulfones, PTFE, ECTFE, PEK, PEEK, PEEKK, PBI, PI and combinations thereof, fiber-reinforced thermoplastics, polymers from renewable biomass sources, such as cellulose hydrate and/or other cellulose-based polymers, thermoplastic elastomers, and combinations and/or blends and/or sulfonated derivatives of the above-mentioned polymers.

9. Combined subgasket and membrane support component for electrochemical applications comprising a substantially fluid impermeable subgasket region encompassing a structured membrane support region, with the membrane support region being integrally formed with the subgasket region, wherein the subgasket region comprises at least one supply aperture and at least one exhaust aperture and wherein the membrane support region comprises a plurality of perforations having an average radius of 1 to 500 µm.

10. Process for the manufacture of a reinforced membrane component for electrochemical applications comprising
(c) producing a combined subgasket and membrane support component in accordance with any one of claims 1 to 8 or providing a combined subgasket and membrane support component in accordance with claim 9; and
(d) applying ion-conducting polymer to the structured membrane support region.

11. Process according to claim 10, wherein the application of ion-conducting polymer in step (d) is carried out by applying a solution or a paste of the ion-conducting polymer or by applying a layer of the ion-conducting polymer by hot lamination or hot pressing.

12. Process according to claim 10 or 11, wherein the ion-conducting polymer is selected from the group consisting of perfluorosulfonic acid polymers, non-fluor-containing organic ion conducting materials and combinations thereof.

13. Process for the manufacture of a membrane electrode assembly (MEA) for electrochemical applications, comprising
(e) producing a reinforced membrane component in accordance with any of claims 10 to 12; and
(f) providing at least one electrode on at least one side of the reinforced membrane;
or
(e') producing a combined subgasket and membrane support component in accordance with any one of claims 1 to 8 or providing a combined subgasket and membrane support component in accordance with claim 9; and
(f') providing at least one electrode on at least one side of the combined subgasket and membrane support component, wherein the at least one electrode comprises ion-conducting polymer on its side facing the combined subgasket and membrane support component.

14. Process according to claim 13, wherein one electrode is provided on a first side of the reinforced membrane or combined subgasket and membrane support component and a second electrode is provided on a second side of the reinforced membrane or combined subgasket and membrane support component, wherein the second site is opposite to the first side.

15. Process according to claim 13 or 14, further comprising
(g) providing at least one gas diffusion layer on the side of the at least one electrode facing away from the reinforced membrane.
